# EUROPEAN PATENT APPLICATION

(11) **EP 2 107 286 A2**
(43) Date of publication of application: **07.10.2009**
(21) Application number: 09155176.2
(22) Date of filing: 13.03.2009
(51) Int. Cl.: F16K 31/06, F16K 25/00, F16K 1/42, F16K 1/36, F16K 15/00

(54) **Fast response check control valve**

(30) Priority: 03.04.2008 US 80458
(71) Applicant: Delphi Technologies, Inc., Troy, Michigan 48007 (US)
(72) Inventor: Burrola, Santos, 32448 Juarez (MX); Schiaffino, Victor A., 32320 Cd. Juarez (MX)
(74) Representative: Denton, Michael John

(57) **Abstract**

A check valve for a vehicle actuator includes a hardened valve seat insert (40) pressed into a non-hardened housing (18). The insert defines a lobed valve seat against which fluid urges a valve element (50), with the valve element (50) being distanced from the valve seat by a rod (30) to open the valve when an actuating coil (24) is deenergized. When the coil (24) is energized the rod (30) is moved away from the valve element (50), allowing fluid pressure to urge the element against the seat to close the valve. The insert can be formed with a rod guide.

## Description

### TECHNICAL FIELD

The present invention relates generally to vehicle check valves.

### BACKGROUND OF THE INVENTION

Electromechanical actuators are used in many vehicle applications to control fluid flow in vehicle systems such as anti-lock brake systems (ABS) and fuel injection systems. Using the latter application as an example, the pressure pulsations from a fuel pump that is driven by a belt or directly from an engine shaft can be controlled by one or more solenoid-operated check valves, the operation of which can be synchronized with a camshaft to deliver the required flow and pressure to fuel rail injectors.

In such an application, the valve plainly must operate very quickly. A variety of factors can complicate achieving proper valve operation under such trying conditions. Among these factors are friction, hydraulic stiction, misalignment, improper damping, inertia, and mass, to name a few. As understood herein, at least some of these factors can be alleviated by reducing the hydraulic forces on the valve. Moreover, as also understood herein reducing hydraulic forces can enhance the ability of the valve to operate very quickly. Still further, the present invention recognizes that reducing hydraulic forces in many applications can have a beneficial cascading effect, e.g., a less-massive valve which has less inertia to resist quick response can be provided.

### SUMMARY OF THE INVENTION

A check valve has a valve housing slidably supporting an actuator rod. A hollow valve seat insert is disposed in the housing. The insert can be hardened but the housing need not be hardened. The insert defines a rod guide slidably receiving the rod and a lobe-shaped opening defining a valve seat. A valve element is juxtaposed with the valve seat for selectively blocking the opening.

The valve element can be formed with at least three lobes, as can be the opening. The lobes can be contiguous to each other.

The rod may be moved by actuating a coil. In such an embodiment, the rod can be urged against the valve element by a spring to distance the valve element from the valve seat when the coil is deenergized. The coil when energized moves the rod away from the valve element to allow fluid pressure to urge the valve element against the valve seat.

In another aspect, a valve includes a valve housing slidably supporting an actuator rod, and a hollow lobe-shaped valve seat is in the housing. A valve element is juxtaposed with the valve seat for selectively blocking an opening circumscribed by the valve seat.

In still another aspect, an actuator includes a valve housing slidably supporting an actuator rod. A valve seat is in the housing and circumscribes a non-round opening. Also, a valve element is juxtaposed with the valve seat and a spring urges the rod toward the valve element in an open configuration. A coil is energizable to move the rod away from the valve element in a closed configuration.

The details of the present invention, both as to its structure and operation, can best be understood in reference to the accompanying drawings, in which like reference numerals refer to like parts, and in which:

### BRIEF DESCRIPTION OF THE DRAWINGS

Figure 1 is a block diagram of the present valve in one non-limiting environment;

Figure 2 is a partial cross-sectional view of one embodiment of the valve actuator assembly, with portions of the housing cut away for clarity;

Figure 3 is an exploded perspective view in partial cross-section of the lower portion of the assembly showing an embodiment of the valve element and valve seat insert in an exploded relationship with the remainder of the valving component enclosure of the housing, with portions of the housing cut away for clarity; and

Figure 4 is an exploded perspective view of a valve seat insert with alternate valve element.

### DESCRIPTION OF THE PREFERRED EMBODIMENT

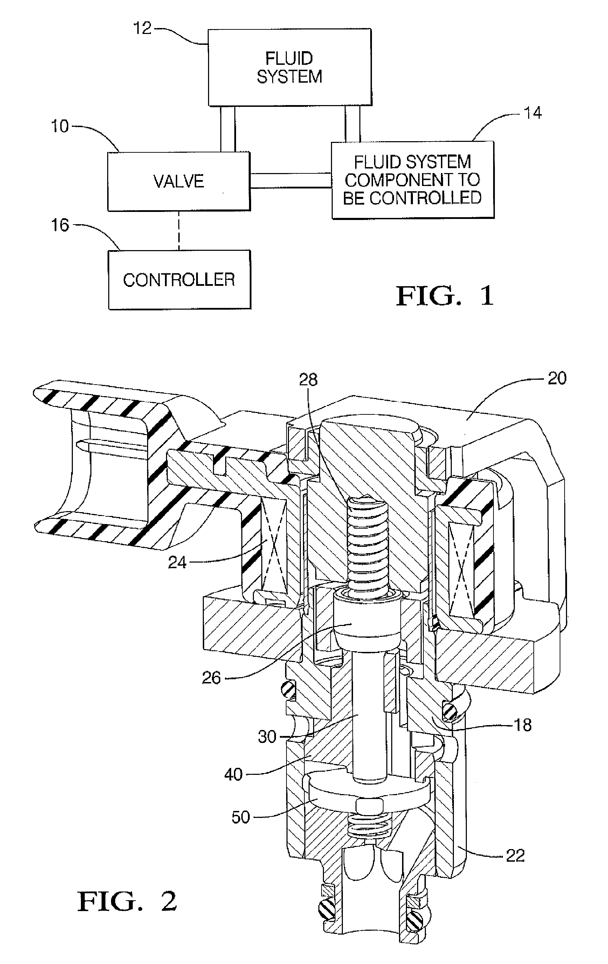

Referring initially to Figure 1, a valve 10 in accordance with present principles may be used in a vehicle system 12 such as vehicle fuel injection system having a fuel pump to control fluid flow such as fuel flow to a component 14 such as an injector rail of the system 12. The valve 10 can be controlled by a controller 16 such as an electro-mechanical control mechanism or a digital computer control mechanism such as an engine control module (ECM).

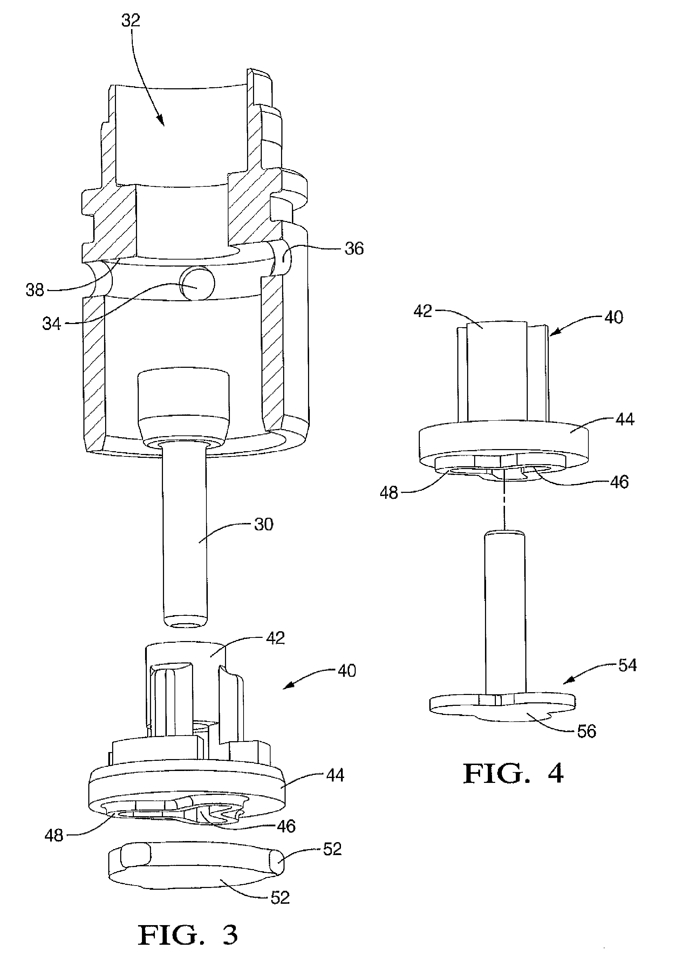

Figures 2 and 3 show an example embodiment of the valve 10. Taking Figure 2 first, the valve 10 can be formed with a hollow, typically metal housing 18 defining an electric component enclosure 20 and a valving component enclosure 22, with the enclosures 20, 22 being defined by the housing 18. The electric component enclosure 22 holds an electrical coil 24 which surrounds a plunger 26 that can reciprocate within the housing 18. A spring 28 in the electric component enclosure 22 urges against the plunger 26 as shown to urge the plunger 26 toward the valving component enclosure 22. When the coil 24 is energized, it overcomes the force of the spring 28 and urges the plunger 26 away from the valving component enclosure 22. An elongated rigid rod 30 is connected to or made integrally with the plunger 26, and the rod 30 extends into the valving component enclosure 22.

Accordingly and as perhaps best shown in Figure 3, in non-limiting implementations the valving component enclosure 22 can define a radially enlarged axial channel 32 and, if desired and depending on the application, radially smaller radial fluid channels 34, 36 that may be perpendicular to each other and that may each lie in a horizontal plane that is perpendicular to the axial channel 32. Furthermore, the valving component enclosure 22 can be formed with an annular shoulder 38 that is perpendicular to the axial channel 32 as shown.

In accordance with present principles, a hollow rigid valve seat insert 40 is made separately from the housing 18 and is disposable in the axial channel 32 of the valving component enclosure 22. The insert 40, which can be press fit into the housing 18, preferably is metal that can be hardened using, e.g., precipitation/age hardening to improve its wear characteristics, while the housing 18, being relieved of some of its wear requirements by the insert 40, need not be hardened so as to optimize its magnetic characteristics.

As shown, the example insert 40 defines an axially-oriented hollow rod guide 42 that slidably receives the rod 30. The walls of the rod guide 42 may be continuous or, as shown, may be defined by plural (e.g., three) axially-oriented wall portions, the inside surface of each of which defines a portion of a cylinder.

At a lower end of the rod guide 42, the insert 40 defines a disk-shaped seat member 44, the upper surface of which abuts the shoulder 38 of the valving component enclosure 22 of the housing 18. A continuous axial passageway is formed by the rod guide 42, and the passageway terminates in an opening 46 of the seat member 44. In accordance with present principles, the opening 46 is not round; in the specific example shown in Figure 3, it is lobe-shaped, and is circumscribed by a complementarily-shaped valve seat 48. Three lobes are shown in Figure 3, it being understood that when a lobe shape is used, more than three lobes may be provided. In the example shown, each lobe is configured as half of a racetrack, i.e., with two opposed co-parallel straight edges joined by an arcuate segment.

A valve element 50 that may be made of resilient plastic rubber is juxtaposed with the valve seat 48 for selectively blocking the opening 46 as shown. The valve element 50 may be generally disk-shaped, and in one non-limiting embodiment the valve element 50 may have plural (e.g., three) small protrusions 52 that may be thought of as "lobes" that are not contiguous to each other, i.e., the lobe-like protrusions 52 are separated from each other by arcuate segments of the periphery of the otherwise disk-shaped valve element 50.

In contrast and referring briefly to Figure 4, which shows a simplified drawing of the insert 40 discussed above but with a different valve element, as shown the present valve may incorporate a valve element 54 having plural lobes 56 that are contiguous to each other and that may match the lobes of the opening 46 of the insert 40.

The valve elements of the present invention may be flat as shown, and may also include structure to stabilize and align the valving portion during operation.

In operation, when the coil 24 is not energized the rod 30 is urged against the valve element 50/54 by the spring 28 to distance the valve element from the valve seat 48, allowing fluid flow through the opening 46. On the other hand, the coil 24 when energized moves the plunger 26 and, hence, rod 30 away from the valve element 50/54 to allow fluid pressure to urge the valve element against the valve seat 48, closing the opening 46.

While the particular FAST RESPONSE CHECK CONTROL VALVE is herein shown and described in detail, it is to be understood that the subject matter which is encompassed by the present invention is limited only by the claims.

## Claims

1. A check valve comprising:
a valve housing (18) slidably supporting an actuator rod (30);
a hollow valve seat insert (40) disposed in the housing and defining a valve seat (48); and
a valve element (50) juxtaposed with the valve seat for selectively blocking an opening (46) circumscribed by the valve seat.

2. The valve of Claim 1, wherein the insert (40) is hardened and the housing (18) is not hardened, the insert defining a rod guide (42) slidably receiving the rod (30) and defining the opening (46), the opening having a lobe-shape.

3. The valve of Claim 1 or 2, wherein the valve element (50) or the opening (46) are formed with at least three lobes.

4. The valve of Claim 3, wherein the lobes are contiguous to each other.

5. The valve of Claim 1 or 2, wherein the rod (30) is moved by actuating a coil (24).

6. The valve of Claim 5, wherein the rod (3 0) is urged against the valve element (50) by a spring (28) to distance the valve element from the valve seat (48) when the coil (24) is deenergized, the coil when energized moving the rod away from the valve element to allow fluid pressure to urge the valve element against the valve seat.

7. An actuator comprising:
a valve housing slidably supporting an actuator rod (30);
a valve seat in the housing and circumscribing a non-round opening;
a valve element (50) juxtaposed with the valve seat;
a spring urging the rod (30) toward the valve element in an open configuration; and
a coil (24) energizable to move the rod away from the valve element in a closed configuration.

8. The actuator of Claim 7, wherein the valve element (50) or the opening (46) are formed with at least three lobes.

9. The actuator of Claim 8, wherein the lobes are contiguous to each other.
